# EUROPEAN PATENT SPECIFICATION

(11) **EP 1 233 400 B1**
(45) Date of publication and mention of the grant of the patent: **16.11.2016**
(21) Application number: 02002092.1
(22) Date of filing: 12.02.2002
(51) Int. Cl.: G09G 3/36, G09G 5/12

(54) **Method and device for driving a LCD display**
Verfahren und Einrichtung zum Antreiben einer Flüssigkristallanzeige
Méthode et dispositif d'attaque pour un dispositif d'affichage à cristaux liquides

(30) Priority: 15.02.2001 KR 2001007453
(43) Date of publication of application: 21.08.2002
(73) Proprietor: Samsung Display Co., Ltd., Gyeonggi-do (KR)
(72) Inventor: Lee, Seung-Woo, Keumcheon-ku Seoul (KR); Cheon, Man-Bok, Yongin-city Kyungki-do (KR); Kwon, Su-Hyun, Yongin-city Kyungki-do (KR)
(74) Representative: Modiano, Micaela Nadia

(56) References cited:
- EP-A2- 0 562 728
- GB-A- 2 071 372
- US-A- 5 648 793
- US-A- 5 828 368

## Description

### BACKGROUND OF THE INVENTION

### (a) Field of the Invention

The present invention relates to a liquid crystal display and an apparatus and method for driving the same. More specifically, the present invention relates to a liquid crystal display capable of realizing a pre-charging method even in the random data-enable mode, and an apparatus and method for driving the same.

### (b) Description of the Related Art

In general, a liquid crystal display (LCD) is a display device in which an electric field is applied to a liquid crystal layer having anisotropic dielectric constant permitivity sandwiched between two substrates, said electric field being adjusted to control the amount of light incident upon the substrates and thereby obtaining a desired image. Such LCDs, including a flat panel type display (FPD) that is very handy to carry, and a thin film transistor (TFT) LCD using a TFT as a switching element are, inter alia, widely used.

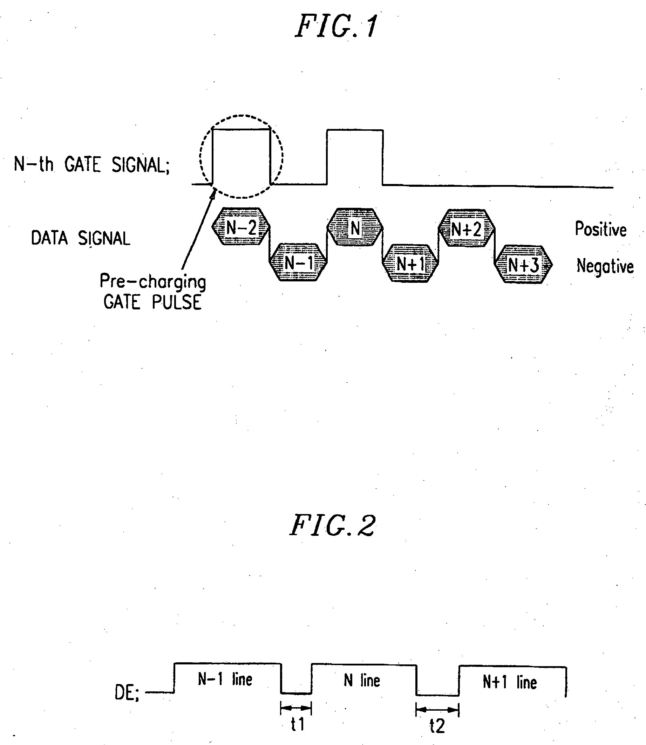

An increased resolution of the LCD has lead to a rapid reduction of the pixel charging time needed. Use is made of a pre-charging method as illustrated in FIG. 1 in order to compensate for the reduced charging time. The term "pre-charging method" as used herein refers to a method of charging a specific pixel over time that involves previously charging a corresponding pixel with data of an adjacent pixel having the same polarity as the corresponding pixel so as to invert the polarity of the pixel and thereafter charging the adjacent pixel with the data of the corresponding pixel.

A conventional gate signal usually appears every frame. However, as illustrated in FIG. 1, the typical pre-charging method compensates for the charging time in such a manner that an additional pre-charging gate pulse is used to previously charge the N-th pixel with the data of the (N-1)-th pixel having the same polarity as the N-th pixel prior to charging with the data of the N-th pixel.

More specifically, two vertical sync start signals STV have to be fed into the gate driver in order to generate a pre-charging gate pulse. For this purpose, use is made of a method of previously generating the vertical sync start signals STV at a designated position using a counter for a frame blank interval.

The data-enable (DE) mode makes the data-enable (DE) signal 'high' only during the interval having effective data, but no problem must arise in driving the LCD even with an irregular interval of the effective data. However, the conventional method using the counter is problematic in that it does not display an image when the interval of the effective data is irregular.

When the output interval of the effective data is irregular, i.e., in the random DE mode, the blank intervals of data-enable signals (for example, t1 and t2) are not conformable with each other with the consequence of a failure in obtaining a normal display of the LCD image.

Document US5648793 discloses an active matrix display system for high capacity flat panel display which includes switches at cross points of row and column electrodes with outputs connected to pixels allowing display of pixels using coincident addressing.

Document EP0562728 discloses a video signal received from an asynchronous link at an irregular frame rate for display on a computer monitor at a regular frame rate. Frames are transferred to the monitor via first and second buffers. A control process manages the transfer of frames between the first and second buffers and is responsible for deciding if, when and how many frames to transfer, in order to minimise the delay between the incoming image and the displayed image.

Document US5828368 discloses a start pulse vertical signal generator using a data enable signal for precharging, and more particularly to a start pulse vertical generator which increases the operating speed of a gate.

### SUMMARY OF THE INVENTION

It is an object of the present invention to solve the above problem and to provide an LCD capable of displaying all data even though a data-enable signal is randomly input.

It is another object of the present invention to provide an apparatus for driving the LCD.

It is further another object of the present invention to provide a method for driving the LCD.

In one aspect of the present invention, to achieve the first object, there is provided an LCD including: a timing controller for receiving external image data, and outputting a vertical sync start signal based on a data-enable signal having an irregular output interval to control the output of the image data, the vertical sync start signal having a generation interval associated with a blank interval of the data-enable signal; a data driver for converting the image data; a gate driver for sequentially applying both first and second gate-on voltages to a same gate line, wherein the first gate-on voltage is to drive a previous line being most adjacent to and having the same polarity as a current line, and the second gate-on voltage is to drive the current line; and an LCD panel being firstly charged with the first gate-on voltage supplied from the gate driver, and secondly charged with the second gate-on voltage, wherein the LCD panel displays the image data received from the data driver during the second charging.

In another aspect of the present invention, to achieve the second object, there is provided an apparatus for driving an LCD that includes an LCD panel having a plurality of data and gate lines, which charges a specific pixel by firstly charging the data of an adjacent pixel having the same polarity as the specific pixel to change the polarity of the corresponding pixel, and secondly by charging the data of the specific pixel, the LCD including: a timing controller for receiving external image data, and outputting a vertical sync start signal based on a data-enable signal having an irregular output interval-to control the output of the image data, the vertical sync start signal having a generation interval associated with a blank interval of the data-enable signal; a data driver for converting the image data and outputting the converted image data to the data line of the LCD panel; and a gate driver for applying a first gate-on voltage to the gate line of the LCD panel to perform a first charging, and a second gate-on voltage to the gate line to perform a second charging, based on the vertical sync start signal, and controlling display of the converted image data supplied from the data driver during the second charging, wherein the first gate-on voltage is to drive a previous line being most adjacent to and having the same polarity as the current line, and the second gate-on voltage is to drive the current line.

In still another aspect of the present invention to achieve the above and other objects, the timing controller preferably includes: an internal data-enable converter for receiving the data-enable signal having an irregular output interval, and outputting an internal data-enable signal shifted by a predetermined number of lines; a counter for counting the number of data-enable signals applied to the internal data-enable converter to output first and second switching signals; a control signal generator for receiving the internal data-enable signal shifted by the predetermined number of lines to output a control signal for driving the LCD panel; a first switch having one input path and a plurality of output paths, for determining the output path of the image data signal based on the first switching signal; a memory section having a plurality of memories for respectively storing image data received via the first switch, and outputting the stored image data as the image data of the next line is applied; and a second switch having a plurality of input paths and one output path for determining the input path of the image data received from the memory section based on the second switching signal, and outputting the image data to the data driver.

In still another aspect of the present invention, to achieve the third object, there is provided a method for driving an LCD that includes an LCD panel having a plurality of data and gate lines, which charges a specific pixel by firstly charging the data of an adjacent pixel having the same polarity as the specific pixel to change the polarity of the corresponding pixel, and secondly by charging the data of the specific pixel, the method including: (a) receiving image data from an external image signal source and a data-enable signal for controlling output of the image data; (b) checking whether the data-enable signal has been received, sequentially recording the image data on a predetermined number of built-in memories upon receiving the data-enable signal, sequentially extracting the recorded image data, and generating an internal data-enable signal upon extraction of the image data to output a vertical sync start signal having a generation interval associated with a blank interval of the data-enable signal; (c) applying a voltage corresponding to the image data to the data lines; and (d) sequentially applying both first and second gate-on voltages based on the vertical sync start signal, wherein the first gate-on voltage is to drive a previous line being most adjacent to and having the same polarity as the current line, and the second gate-on voltage is to drive the current line.

Preferably, the data extraction based on the output of the vertical sync start signal in step (b) includes: (b-11) initializing a line count value and an internal flag; (b-12) checking whether the data-enable signal is present; (b-13), increasing the line count value by one and checking whether the updated line count value is greater than a first number of lines, which is the number of gate lines plus one, when the data-enable signal exists in step (b-12); (b-14) returning to step (b-12) when the updated line count value is equal to or less than the first number of lines, and generating a memory extraction flag signal to extract the data when the updated line count value is greater than the first number of lines; (b-15) checking whether the updated line count value is equal to the number of gate lines, and if not, returning to step (b-12); (b-16) generating an internal flag signal and increasing an internal flag count value by one, when the updated line count value is equal to the number of gate lines in step (b-15) or when the data-enable signal does not exist in step (b-12); and (b-17) comparing the updated interval flag count value with the first number of Jines, ending the flow of the method when the internal flag count value is greater than the first number of lines, and returning to step (b-16) when the internal flag count value is equal to or less than the first number of lines.

Preferably, the data recording based on the output of the vertical sync start signal in step (b) includes: (b-21) initializing a line count value; (b-22) checking whether the data-enable signal is present, ending the flow of the method when the data-enable signal does not exist, and increasing the line count value by one when the data-enable signal exists; (b-23) generating a memory recording flag signal to record the data; and (b-24) checking whether the updated line count value in step (b-22) is equal to the number of vertically arranged gate lines, ending the flow of the method when the updated line count value is equal to the number of gate lines, and returning to step (b-22) when the updated line count value is not equal to the number of gate lines.

The LCD and the apparatus and method for driving the same use a built-in counter based on input data-enable signals to output an LCD control signal to a proper position in spite of the irregular positions of the input data-enable signals, which allows a normal display of all data in the presence of random inputs of the data-enable signals.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
FIG. 1 is a waveform diagram illustrating a pre-charging gate pulse;
FIG. 2 is a waveform diagram illustrating the blank interval of a data-enable signal in the random DE mode;
FIG. 3 is a diagram illustrating an LCD using the pre-charging method in accordance with an embodiment of the present invention;
FIG. 4 is a detailed diagram of the timing controller shown in FIG. 3;
FIG. 5 is a waveform diagram illustrating a vertical sync start signal for pre-charging in the random DE mode in accordance with an embodiment of the present invention;
FIG. 6 is a flow chart illustrating generation of the vertical sync start signal when extracting data from a memory in accordance with an embodiment of the present invention; and
FIG. 7 is a flow chart illustrating generation of the vertical sync start signal when recording data in a memory in accordance with an embodiment of the present invention.

### DETAILED DESCRIPTION OF THE PREFERRED EMBODIMENTS

In the following detailed description, only the preferred embodiment of the invention has been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature, and not restrictive.

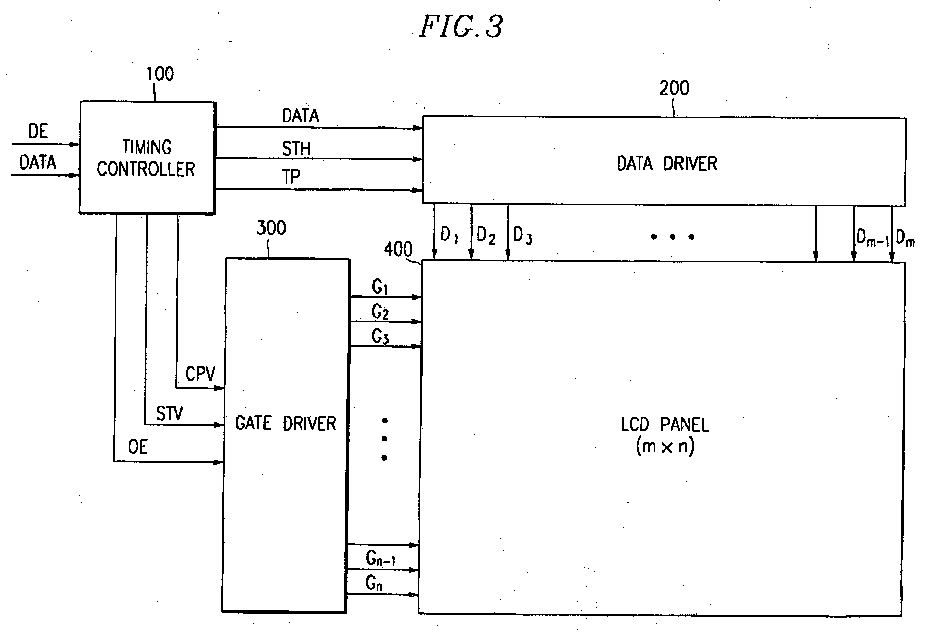

FIG. 3 is a diagram illustrating an LCD using the pre-charging method in accordance with an embodiment of the present invention.

Referring to FIG. 3, the LCD using the pre-charging method in accordance with the embodiment of the present invention, comprises a timing controller 100, a data driver 200, a gate driver 300, and an LCD panel 400.

The timing controller 100 receives an RGB data signal DATA and a data-enable signal DE from an external graphic controller (not shown) and outputs to the data driver 200 the corresponding RGB data signal, a horizontal start signal STH for RGB data transmission, and a TP (or LOAD) signal for starting the output to a data driver IC after the completion of the RGB data transmission.

The timing controller 100, receiving the RGB data signal DATA and the data-enable signal DE from the external graphic controller (not shown), also outputs to the gate driver 300 a gate clock signal CPV for selection of the next gate line, a vertical sync start signal STV for selection of the first gate line, and an output enable signal OE for controlling the output of the gate drive IC.

In particular, the vertical sync start signal STV output from the timing controller 100 according to the present invention includes not only a gate pulse for substantially driving the gate lines but also a gate pulse for pixel data applied to a most adjacent gate line (e.g., the (N-2)'th gate line) having the same polarity as the current gate line (e.g.; the N'th gate line), namely, a precharging gate pulse.

The data driver 200 comprises a plurality of data driver IC's to generate a plurality of data signals STH and TP for the LCD panel 400 based on a plurality of control signals received from the timing controller 100. The data driver 200, for example, latches the individual RGB data sequentially received in accord with the applied TP signal to change a dot-at-a-time scanning timing system to a line-at-a-time scanning system, and outputs a plurality of data signals D₁, D₂, ..., Dₘ₋₁ and Dₘ to the data lines of the LCD panel 400.

The gate driver 300 comprises a plurality of gate driver IC's and sequentially applies a gate-on signal to gate lines based on the control signals CPV, STV and OE received from the timing controller 100, turning on the TFT.

In particular, since the vertical sync start signal STV output from the timing controtter 100 according to the present invention includes a control signal to apply a gate pulse for pixel data to a most adjacent gate line having the same polarity as the current gate line, as well as a control signal to apply a gate pulse to the current gate line, the gate-on voltage output from the gate driver 300 includes two gate lines for every frame to perform a previous charging with a gate pulse of the most adjacent previous line and thereafter substantially drive the gate lines of the LCD panel with the gate pulse of the current line.

The most adjacent line may be the first, the second, or the third previous line, or the like, that has the same polarity as the current line.

The LCD panel 400 has a plurality of gate lines for transmission of a gate-on signal supplied from the gate driver 300, and a plurality of data lines for transmission of a data voltage from the data driver 200. The regions surrounded with the gate and data lines form the respective pixels, each of which includes a thin film transistor (TFT) (not shown) with gate and source electrodes connected to the gate and data lines, respectively, and pixel and storage capacitors (not shown) connected to the drain electrode of the TFT, thus displaying specific image information.

In particular, according to the present invention, the gate-on signal applied from the gate driver 300 has two gate pulses every frame to previously perform charging with the gate pulse of the most adjacent line having the same polarity as the data applied to the current gate line for driving the current frame and for displaying RGB image data applied from the data driver 200 for driving the current line.

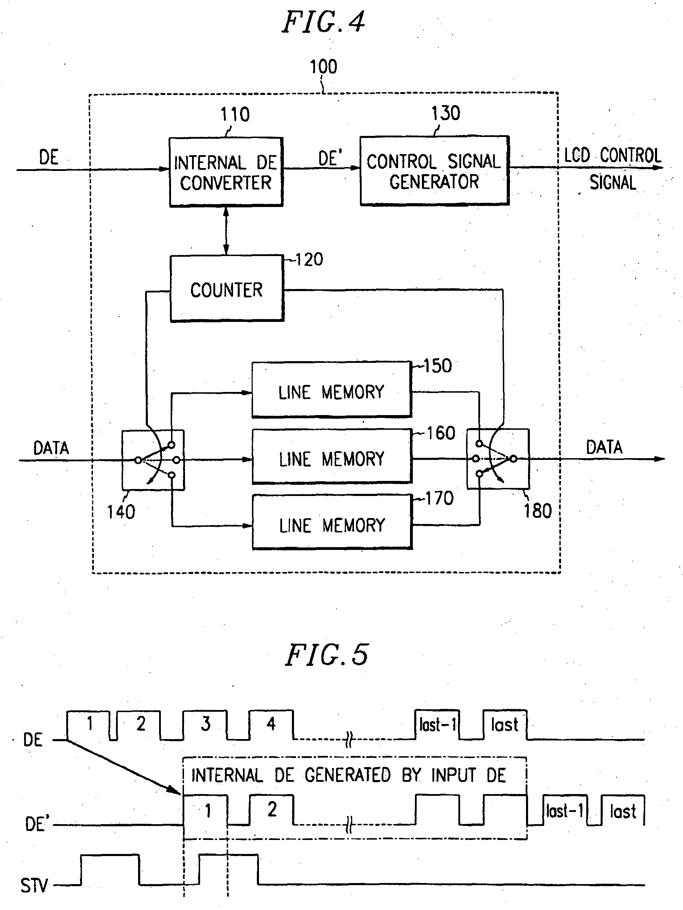

FIG. 4 is a detailed diagram of the timing controller shown in FIG. 3, and FIG. 5 is a waveform diagram illustrating a vertical sync start signal for pre-charging in the random DE mode in accordance with an embodiment of the present invention.

Referring to FIG. 4, the timing controller 100 according to the embodiment of the present invention includes an internal DE converter 110, a counter 120, a control signal generator 130, a first switch 140, a first memory 150, a second memory 160, a third memory 170, and a second switch 180.

The internal DE converter 110 receives a data-enable signal DE supplied from the graphic controller (not shown), more specifically a random DE signal, and outputs a two-line shifted internal data-enable signal DE' to the control signal generator 130. The output of the internal data-enable signal DE' is associated with the counting operation of the counter 120. The internal data-enable signal DE' is output in synchronization with the rising of the input DE from the third line of the random DE signal.

The counter 120 checks the input of the random DE signal applied to the internal DE converter 110, and when applying every frame, outputs a first switching signal to the internal DE converter 110 and the first switch 140 and a second switching signal associated with the first switching signal to the second switch 180.

The counter 120 further outputs the first switching signal to the internal DE converter 110 to control the output of the internal data-enable signal, and automatically generates the internal data-enable signal corresponding to the last two lines to compensate for the internal data-enable signal of the two missing lines.

The blank interval of the internal data-enable signal thus generated automatically may be the interval of a specific internal data-enable signal (for example, the internal data-enable signal copied in correspondence to the just previous line) or an interval that is usually defined.

The control signal generator 130 receives the two-line shifted internal enable signal DE' from the internal DE generator 110 and outputs control signals STH, TP, CPV, STV and OE for driving the LCD panel 400, to the data driver 200 and the gate driver 300.

In particular, the vertical sync start signal STV for realizing the pre-charging method according to an embodiment of the present invention applies a control signal to the gate driver 300 to output the gate pulse for the pixel data corresponding to the line prior to two lines from the current line as well as a control signal to output the gate pulse to the current line.

The first switch 140 comprises one port input terminal and three port output terminals and sequentially outputs the RGB image data signals applied from the graphic controller (not shown) to the first, second and third memories 150, 160 and 170 via any one of the three port output terminals in response to the first switching signal from the counter 120.

The first, second and third memories 150, 160 and 170 sequentially store the RGB image data received via the first switch 140 and output the stored RGB image data to the second switch 180 when the RGB image data of the next line are applied.

More specifically, in the case where the first, second and third memories 150, 160 and 170 comprise dual port memories that simultaneously perform read and write operations, the first, second and third image data are stored in the first, second and third memories 150, 160 and 170, respectively, and the first image data are output from the first memory 150 when the fourth image data are stored in the first memory 150.

On the other hand, in the case where the first, second and third memories 150, 160 and 170 comprise signal port memories that differently perform read and write operations, the first and third image data are stored in the first and second memories 150 and 160, respectively, and the first image data are output from the first memory 150 when the third image data are stored in the third memory 170.

The memory as used herein is a line memory capable of simultaneously applying RGB image data stored in every gate line.

The second switch 180 comprises three port input terminals and one port output terminal and sequentially outputs the RGB image data signals applied from the first, second and third memories 150, 160 and 170 to the data driver 200 in response to the second switching signal from the counter 120.

Now, a description will be given as to the generation algorithm of the vertical sync start signal STV for realizing the pre-charging method in the random DE mode according to the present invention as described above.

First, the three line memories 150, 160 and 170 are sequentially used to store RGB image data such that RGB image data for two lines (i.e., k-th and (k+1)-th lines) are stored in the first and second memories 150 and 160, respectively.

Sequentially, the data stored in the first memory 150 two lines prior are output to the data driver 200 while storing the RGB image data for the third line (i.e., (k+2)-th line) in the third line memory 170.

The internal DE signal DE' is generated in synchronization with the rising of the input DE signal from the third line of the input DE signal, because all LCD control signals STH, HCLK, OE and CPV are generated based on the DE signal and the internal DE signal DE' has to be generated after the two lines.

It is, however, impossible to generate the internal DE signals corresponding to the last two lines if the internal data-enable signal DE' is generated in such a way. To solve this problem, the counter 120 is used to determine which internal DE is generated for the current input data and to automatically generate an internal data-enable signal DE' corresponding to the last two lines. The blank width of the internal data-enable signal DE' is that of the normal data-enable signal.

Now, descriptions will be given as to a method for extracting data from a line memory and a method for recording data on the line memory based on the above-mentioned vertical sync start signal generating algorithm for realizing the pre-charging method in the random DE mode.

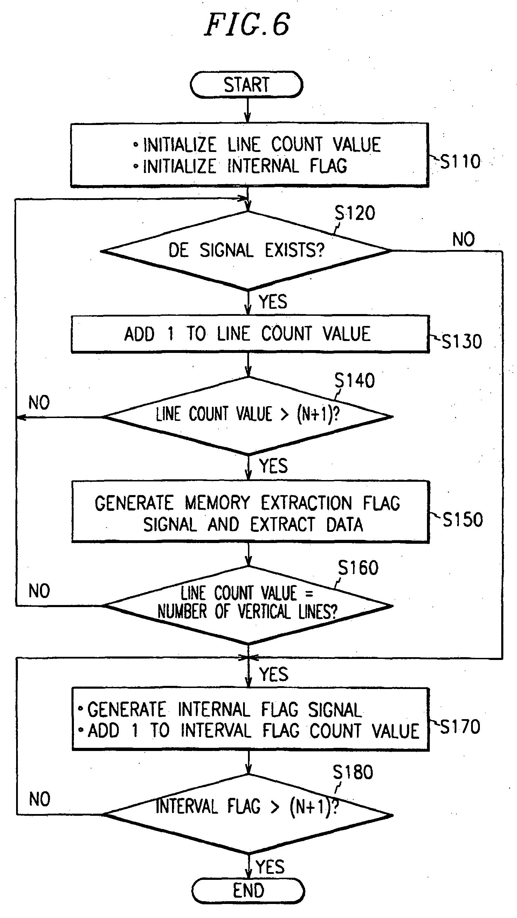

FIG. 6 is a flow chart illustrating generation of the vertical sync start signal when extracting data from a line memory in accordance with an embodiment of the present invention.

Referring to FIG. 6, a line count value and an internal flag are first initialized at zero ('0'), in step s110. The internal flag is a signal used to form an extraction part of the memory in the interval destitute of a data-enable signal DE.

Subsequently, it is checked in step s120 whether the data-enable signal DE is present. If so, one ('1') is added to the line count value in step s130 and it is checked in step s140 whether the line count value is greater than the number of gate lines plus one, i.e., N+1. The number of gate lines represents an interval between the two vertical sync start signals STV.

If the line count value is not greater than N+1, the flow of the procedure returns to the routine of step s120. Otherwise, if the line value is greater than N+1, a memory extraction flag signal is generated to extract the data, in step s150.

It is then checked in step s160 whether the line count value is equal to the number of vertical lines. If not, the flow of the procedure returns to the routine of step s120.

If the line count value is equal to the number of vertical lines in step s160, or if there is no data-enable signal DE in step s120, the internal flag signal is generated and one ('1') is added to the internal flag count value, in step s170.

It is then checked in step s180 whether the internal flag count value is greater than the number of gate lines plus one, i.e., N+1. If not, the flow of the procedure goes to step s170; and otherwise, the flow ends.

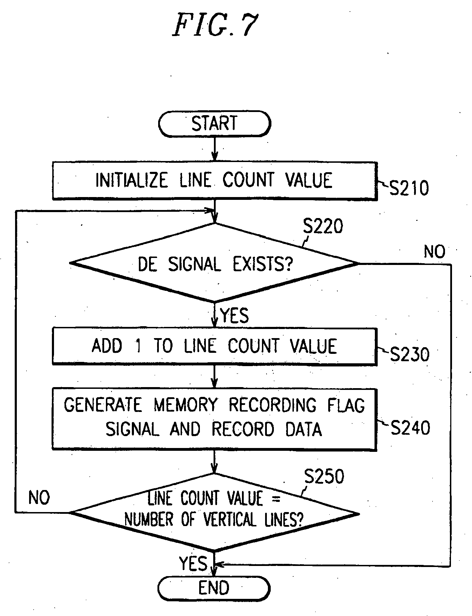

FIG. 7 is a flow chart illustrating generation of the vertical sync start signal when recording data on a line memory in accordance with an embodiment of the present invention.

Referring to FIG. 7, a line count value is first initialized at zero ('0'), in step s210. It is then checked in step s220 whether a data-enable signal DE is present. If so, one ('1') is added to the line count value, in step s230, and a memory recording flag signal is generated to record the data, in step s240.

Subsequently, it is checked in step s250 whether the line count value is equal to the number of vertical lines. If not, the flow of the procedure goes to step s220; and otherwise, the flow ends.

As described above, even through the data-enable signal to control the output of the RGB image data in the LCD using the pre-charging method is randomly applied, the internal data-enable signal is generated in synchronization with the rising of the data-enable signal input after two lines for the input data-enable signal, so that the generation interval of the LCD control signals can be changed to produce a normal display of an image.

The internal data-enable signals corresponding to the last two lines are automatically generated using a built-in counter to compensate for the missing internal data-enable signals of the two lines. Preferably, the blank interval of the internal data-enable signals automatically generated is constant at all times.

While this invention has been described in connection with what is presently considered to be the most practical and preferred embodiment, it is to be understood that the invention is not limited to the disclosed embodiments, but, on the contrary, is intended to cover various modifications and equivalent arrangements included within the scope of the appended claims.

As described above, the present invention uses a built-in counter based on input data-enable signals supplied from an external graphic controller so that an LCD control signal can be generated in spite of the irregular positions of the input data-enable signals. This allows a normal display of all data even though the data-enable signals are randomly input.
where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An apparatus for driving an LCD, the LCD including an LCD panel having a plurality of data lines (D1, D2, D3,..., Dm-1, Dm) and a plurality of gate lines (G1, G2, G3, ..., Gm-1, Gm), the LCD charging a specific pixel by firstly charging the data of an adjacent pixel having the same polarity as the specific pixel to change the polarity of the corresponding pixel, and secondly, by charging the data of the specific pixel, the driving apparatus comprising:
a timing controller (100) for receiving external image data, and outputting a vertical sync start signal (STV) based on a data-enable signal (DE) having an irregular output interval to control the output of the image data, the vertical sync start signal (STV) having a generation interval corresponding to a blank interval of the internal data-enable signal (DE');
a data driver (200) for converting the image data and outputting the converted image data to one of the data lines of the LCD panel; and
a gate driver (300) for applying a first gate-on voltage in a first charging to the gate line of the LCD panel, and a second gate-on voltage in a second charging to the gate line, based on the vertical sync start signal (STV), and controlling display of the converted image data supplied from the data driver (200) during the second charging, wherein the first gate-on voltage drives a previous line being most adjacent to and having the same polarity as the current line, and the second gate-on voltage is to drive the current line.

2. The apparatus as claimed in claim 1, wherein the vertical sync start signal (STV) comprises a signal for generating the first gate-on voltage and a signal for generating the second gate-on voltage.

3. The apparatus as claimed in claim 1, wherein the timing controller (100) comprises:
an internal data-enable converter (110) for receiving the data-enable signal (DE) having an irregular output interval, and outputting an internal data-enable signal (DE') shifted by a predetermined number (N) of lines;
a counter (120) for counting the number of data-enable signals (DE) applied to the internal data-enable converter (110) to output first and second switching signals;
a control signal generator (130) for receiving the internal data-enable signal-(DE') shifted by the predetermined number (N) of lines to output a control signal for driving the LCD panel (400);
a first switch (140) having one input path and a plurality of output paths, for determining the output path of the image data signal based on the first switching signal;
a memory section having a plurality of memories (150, 160, 170) for respectively storing image data received via the first switch (140), and outputting the stored image data as the image data of the next line is applied; and
a second switch (180) having a plurality of input paths and one output path, for determining the input path of the image data received from the memory section based on the second switching signal, and outputting the image data to the data driver (200).

4. The apparatus as claimed in claim 1, wherein the predetermined number (N) of lines is at least one.

5. The apparatus as claimed in claim 1, wherein the internal data-enable signal (DE') is generated in synchronization with the input data-enable signal (DE) shifted by a predetermined number (N) of lines, the internal data-enable signal (DE') having the same polarity as the input data-enable signal (DE).

6. The apparatus as claimed in claim 1, wherein the memory (150, 160, 170) comprises a line memory.

7. A liquid crystal display (LCD) comprising:
an LCD panel (400) being firstly charged with the first gate-on voltage supplied from the gate driver (300), and secondly charged with the second gate-on voltage, wherein the LCD panel (400) displays the image data received from the data driver (200) during the second charging and the drive apparatus of claim 1.

8. The LCD as claimed in claim 7, wherein the vertical sync start signal (STV) comprises a signal for generating the first gate-on voltage and a signal for generating the second gate-on voltage.

9. The LCD as claimed in claim 7, wherein the timing controller (100) comprises:
an internal data-enable converter (110) for receiving the data-enable signal (DE) having an irregular output interval, and outputting an internal data-enable signal (DE') after being shifted by a predetermined number (N) of lines;
a counter (120) for counting the number of data-enable signals (DE) applied to the internal data-enable converter (110) to output first and second switching signals;
a control signal generator (130) for receiving the internal data-enable signal (DE') shifted by the predetermined number (N) of lines to output a control signal for driving the LCD panel (400);
a first switch (140) having one input path and a plurality of output paths, for determining the output path of the image data signal based on the first switching (140) signal;
a memory section having a plurality of memories (150, 160, 170) for respectively storing image data received via the first switch (140), and outputting the stored image data when the image data of the next line is applied; and
a second switch (180) having a plurality of input paths and one output path, for determining the input path of the image data received from the memory section based on the second switching signal, and outputting the image data to the data driver (200),

10. The LCD as claimed in claim 7, wherein the predetermined number (N) of lines is at least one.

11. The LCD as claimed in claim 7, wherein the internal data-enable signal (DE') is generated in synchronization with the input data-enable signal (DE) shifted by a predetermined number (N) of lines, the internal data-enable signal (DE') having the same polarity as the input data-enable signal (DE).

12. The LCD as claimed in claim 7, wherein the memory (150, 160, 170) comprises a line memory.

13. A method for driving an LCD that includes an LCD panel (400) having a plurality of data lines (D1, D2, D3,..., Dm-1, Dm) and a plurality of gate lines (G1, G2, G3, ..., Gm-1, Gm), which charges a specific pixel by firstly charging the data of an adjacent pixel having the same polarity as the specific pixel to change the polarity of the corresponding pixel, and secondly by charging the data of the specific pixel, the method comprising:
(a) receiving image data from an external image signal source and a data-enable signal (DE) for controlling output of the image data;
(b) checking (s120) whether the data-enable signal (DE) has been received, sequentially recording the image data on a predetermined number of built-in memories (150, 160, 170) upon receiving the data-enable signal (DE), sequentially extracting the recorded image data, and generating (s150, s240) an internal data-enable signal (DE') upon extraction of the image data to output a vertical sync start signal (STV) having a generation interval corresponding to a blank interval of the internal data-enable signal (DE');
(c) applying a voltage corresponding to the image data to the data lines (D1, D2, D3,..., Dm-1, Dm); and
(d) sequentially applying both first and second gate-on voltages to the gate lines (G1, G2, G3, ..., Gm-1, Gm) based on the vertical sync start signal (STV), wherein the first gate-on voltage is to drive a previous line being most adjacent to and having the same polarity as the current line, and the second gate-on voltage is to drive the current line.

14. The method as claimed in claim 13, wherein the memories (150, 160, 170) comprise a line memory.

15. The method as claimed in claim 13, wherein the vertical sync start signal (STV) comprises a signal for generating the first gate-on voltage and a signal for generating the second gate-on voltage.

16. The method as claimed in claim 13, wherein the predetermined number (N) is at least one.

17. The method as claimed in claim 16, wherein the internal data-enable signal (DE') is generated in synchronization with the input data-enable signal (DE) shifted by a predetermined number (N) of lines, the internal data-enable signal (DE') having the same polarity as the input data-enable signal (DE).

18. The method as claimed in claim 13, wherein the output of the vertical sync start signal (STV) when extracting the data in step (b) comprises:
(b-11) initializing (s110) a line count value and an internal flag;
(b-12) checking (s120) whether the data-enable signal (DE) is present;
(b-13) increasing (s130) the line count value by one and checking whether the updated line count value is greater than a first number of lines (N+1), which is the number of gate lines plus one (N+1), when the data-enable signal (DE) exists in step (b-12);
(b-14) returning to step (b-12) when the updated line count value is equal to or less than the first number of lines (N+1), and generating (s150) a memory extraction flag signal to extract the data when the updated line count value is greater than the first number of lines (N+1);
(b-15) checking (s160) whether the updated line count value is equal to the number of gate lines (N), and if not, returning to step (b-12);
(b-16) generating (s170) an internal flag signal and increasing an internal flag count value by one, when the updated line count value is equal to the number of gate lines (N) in step (b-15) or when the data-enable signal (DE) does not exist in step (b-12); and
(b-17) comparing (s180) the updated interval flag count value with the first number of lines (N+1), ending the flow of the method when the internal flag count value is greater than the first number of lines (N+1), and returning to step (b-16) when the internal flag count value is equal to or less than the first number of lines (N+1).

19. The method as claimed in claim 13, wherein the output of the vertical sync start signal (STV) when recording the data in step (b) comprises:
(b-21) initializing (s210) a line count value;
(b-22) checking (s220) whether the data-enable signal (DE) is present, ending the flow of the method when the data-enable signal (DE) does not exist, and increasing (s230) the line count value by one when the data-enable signal (DE) exists;
(b-23) generating (s240) a memory-recording flag signal to record the data; and
(b-24) checking (s250) whether the updated line count value in step (b-22) is equal to the number (N) of vertically arranged gate lines (G1, G2, G3, ..., Gm-1, Gm), ending the flow of the method when the updated line count value is equal to the number of gate lines (N), and returning to step (b-22) when the updated line count value is not equal to the number of gate lines (N).

## Patentansprüche

1. Eine Vorrichtung zum Ansteuern einer Flüssigkristallanzeige, wobei die Flüssigkristallanzeige eine Flüssigkristallanzeigentafel mit einer Vielzahl von Datenzeilen (D1, D2, D3, ... Dm-1, Dm) und einer Vielzahl von Gate-Zeilen (G1, G2, G3, ... Gm-1, Gm) einschließt, wobei die Flüssigkristallanzeige ein bestimmtes Pixel lädt, indem sie erstens die Daten eines benachbarten Pixels lädt, das dieselbe Polarität hat wie das bestimmte Pixel hat, um die Polarität des entsprechenden Pixels zu ändern, und zweitens die Daten des bestimmten Pixels lädt, wobei die Ansteuervorrichtung Folgendes umfasst:
eine Zeitsteuerung (100), um externe Bilddaten zu empfangen und ein vertikales Sync-Startsignal (STV) auf der Grundlage eines Daten-Freigabesignals (data-enable signal, DE) auszugeben, das ein unregelmäßiges Ausgabeintervall hat, um die Ausgabe der Bilddaten zu steuern, wobei das vertikale Sync-Startsignal (STV) ein Erzeugungsintervall hat, das einem leeren Intervall des internen Daten-Freigabesignals (DE') entspricht;
einen Datentreiber (200), um die Bilddaten umzuwandeln und die umgewandelten Bilddaten an eine der Datenzeilen der Flüssigkristallanzeigentafel auszugeben; und
einen Gate-Treiber (300), um in einem ersten Ladevorgang eine erste Gate-Einschaltspannung an die Gate-Leitung der Flüssigkristallanzeigentafel und in einem zweiten Ladevorgang eine zweite Gate-Einschaltspannung an die Gate-Leitung auf der Grundlage des vertikalen Sync-Startsignals (STV) anzulegen, und um die Anzeige der umgewandelten Bilddaten, die vom Datentreiber (200) geliefert werden, während des zweiten Ladevorgangs zu steuern, wobei die erste Gate-Einschaltspannung eine vorhergehende Zeile ansteuert, die der aktuellen Zeile am nächsten liegt und dieselbe Polarität hat wie sie, wobei die zweite Gate-Einschaltspannung dazu dient, die aktuelle Zeile anzusteuern.

2. Die Vorrichtung gemäß Anspruch 1, wobei das vertikale Sync-Startsignal (STV) ein Signal zum Erzeugen der ersten Gate-Einschaltspannung und ein Signal zum Erzeugen der zweiten Gate-Einschaltspannung umfasst.

3. Die Vorrichtung gemäß Anspruch 1, wobei die Zeitsteuerung (100) Folgendes umfasst:
einen internen Datenfreigabe-Konverter (110), um das Datenfreigabesignal (DE) zu empfangen, das ein unregelmäßiges Ausgabeintervall hat, und ein internes Datenfreigabesignal (DE') auszugeben, verschoben um eine vordefinierte Anzahl (N) von Zeilen;
einen Zähler (120) zum Zählen der Datenfreigabesignale (DE), die an den internen Datenfreigabe-Konverter (110) angelegt werden, um erste und zweite Schaltsignale auszugeben;
einen Steuersignalgenerator (130) zum Empfangen des internen Datenfreigabesignals (DE'), verschoben um die vordefinierte Anzahl (N) von Zeilen, um ein Steuersignal zum Ansteuern der Flüssigkristallanzeigentafel (400) auszugeben;
einen ersten Schalter (140) mit einem Eingangspfad und einer Vielzahl von Ausgangspfaden zum Bestimmen des Ausgangspfades des Bilddatensignals anhand des ersten Schaltsignals;
einen Speicherabschnitt mit einer Vielzahl von Speichern (150, 160, 170) zum Speichern von Bilddaten, die über den ersten Schalter (140) empfangen werden, und zum Ausgeben der gespeicherten Bilddaten, wenn die Bilddaten der nächsten Zeile angelegt werden; und
einen zweiten Schalter (180) mit einer Vielzahl von Eingangspfaden und einem Ausgangspfad, um den Eingangspfad der Bilddaten, die vom Speicherabschnitt empfangen wurden, anhand des zweiten Schaltsignals zu bestimmen und die Bilddaten an den Datentreiber (200) auszugeben.

4. Die Vorrichtung gemäß Anspruch 1, wobei die vordefinierte Anzahl (N) von Zeilen mindestens eins ist.

5. Die Vorrichtung gemäß Anspruch 1, wobei das interne Datenfreigabesignal (DE') in Synchronisation mit dem Eingabedaten-Freigabesignal (DE) erzeugt wird, verschoben um eine vordefinierte Anzahl (N) von Zeilen, wobei das interne Datenfreigabesignal (DE') dieselbe Polarität hat wie das Eingabedaten-Freigabesignal (DE).

6. Die Vorrichtung gemäß Anspruch 1, wobei der Speicher (150, 160, 170) einen Zeilenspeicher umfasst.

7. Eine Flüssigkristallanzeige (LCD), die Folgendes umfasst:
eine Flüssigkristallanzeigentafel (400), die erstens mit der ersten Gate-Einschaltspannung geladen wird, die vom Gate-Treiber (300) geliefert wird, und zweitens mit der zweiten Gate-Einschaltspannung geladen wird, wobei die Flüssigkristallanzeigentafel (400) die Bilddaten anzeigt, die vom Datentreiber (200) während des zweiten Ladevorgangs und von der Antriebsvorrichtung gemäß Anspruch 1 empfangen werden.

8. Die Flüssigkristallanzeige gemäß Anspruch 7, wobei das vertikale Sync-Startsignal (STV) ein Signal zur Erzeugung der ersten Gate-Einschaltspannung und ein Signal zur Erzeugung der zweiten Gate-Einschaltspannung umfasst.

9. Die Flüssigkristallanzeige gemäß Anspruch 7, wobei die Zeitsteuerung (100) Folgendes umfasst:
einen internen Datenfreigabe-Konverter (110) zum Empfangen des Datenfreigabesignals (DE), das ein unregelmäßiges Ausgabeintervall hat, und zum Ausgeben eines internen Datenfreigabesignals (DE'), nachdem es um eine vordefinierte Anzahl (N) von Zeilen verschoben wurde;
einen Zähler (120) zum Zählen der Datenfreigabesignale (DE), die an den internen Datenfreigabe-Konverter (110) zur Ausgabe erster und zweiter Schaltsignale angelegt werden;
einen Steuersignalgenerator (130) zum Empfangen des internen Datenfreigabesignals (DE'), verschoben um die vordefinierte Anzahl (N) von Zeilen, um ein Steuersignal zum Ansteuern der Flüssigkristallanzeigetafel (400) auszugeben;
einen ersten Schalter (140) mit einem Eingangspfad und einer Vielzahl von Ausgangspfaden zum Bestimmen des Ausgangspfades des Bilddatensignals anhand des ersten Schalter (140)-signals;
einen Speicherabschnitt mit einer Vielzahl von Speichern (150, 160, 170) zum Speichern von Bilddaten, die über den ersten Schalter (140) empfangen werden, beziehungsweise zum Ausgeben der gespeicherten Bilddaten, wenn die Bilddaten der nächsten Zeile angelegt werden; und
einen zweiten Schalter (180) mit einer Vielzahl von Eingangspfaden und einem Ausgangspfad, um den Eingangspfad der Bilddaten, die vom Speicherabschnitt empfangen wurden, anhand des zweiten Schaltsignals zu bestimmen und die Bilddaten an den Datentreiber (200) auszugeben.

10. Die Flüssigkristallanzeige gemäß Anspruch 7, wobei die vordefinierte Anzahl (N) von Zeilen mindestens eins ist.

11. Die Flüssigkristallanzeige gemäß Anspruch 7, wobei das interne Datenfreigabesignal (DE') in Synchronisation mit dem Eingabedaten-Freigabesignal (DE) erzeugt wird, verschoben um eine vordefinierte Anzahl (N) von Zeilen, wobei das interne Datenfreigabesignal (DE') dieselbe Polarität hat wie das Eingabedaten-Freigabesignal (DE).

12. Die Flüssigkristallanzeige gemäß Anspruch 7, wobei der Speicher (150, 160, 170) einen Zeilenspeicher umfasst.

13. Ein Verfahren zum Ansteuern einer Flüssigkristallanzeige, die eine Flüssigkristallanzeigentafel (400) mit einer Vielzahl von Datenzeilen (D1, D2, D3, ... Dm-1, Dm) und einer Vielzahl von Gate-Zeilen (G1, G2, G3, ... Gm-1, Gm) einschließt, das ein bestimmtes Pixel lädt, indem es erstens die Daten eines benachbarten Pixels lädt, das dieselbe Polarität hat wie das bestimmte Pixel, um die Polarität des entsprechenden Pixels zu ändern, und zweitens die Daten des bestimmten Pixels lädt, wobei das Verfahren Folgendes umfasst:
(a) Empfangen von Bilddaten von einer externen Bildsignalquelle und eines Datenfreigabesignals (DE) zum Steuern der Ausgabe der Bilddaten;
(b) Überprüfen (s120), ob das Datenfreigabesignal (DE) empfangen wurde, sequentielles Erfassen der Bilddaten in einer vordefinierten Anzahl eingebauter Speicher (150, 160, 170) nach Empfangen des Datenfreigabesignals (DE), sequentielles Extrahieren der erfassten Bilddaten und Erzeugen (s150, s240) eines internen Datenfreigabesignals (DE') nach dem Extrahieren der Bilddaten, um ein vertikales Sync-Startsignal (STV) auszugeben, das ein Erzeugungsintervall hat, welches einem leeren Intervall des internen Datenfreigabesignals (DE') entspricht;
(c) Anlegen einer Spannung, die den Bilddaten entspricht, an die Datenzeilen (D1, D2, D3, ... Dm-1, Dm); und
(d) sequentielles Anlegen sowohl erster als auch zweiter Gate-Einschaltspannungen an die Gate-Zeilen (G1, G2, G3, ... Gm-1, Gm) auf der Grundlage des vertikalen Sync-Startsignals (STV), wobei die erste Gate-Einschaltspannung dazu dient, eine vorhergehende Zeile anzusteuern, die der aktuellen Zeile am nächsten ist und dieselbe Polarität hat wie sie, und die zweite Gate-Einschaltspannung dazu dient, die aktuelle Zeile anzusteuern.

14. Das Verfahren gemäß Anspruch 13, wobei die Speicher (150, 160, 170) einen Zeilenspeicher umfassen.

15. Das Verfahren gemäß Anspruch 13, wobei das vertikale Sync-Startsignal (STV) ein Signal zur Erzeugung der ersten Gate-Einschaltspannung und ein Signal zur Erzeugung der zweiten Gate-Einschaltspannung umfasst.

16. Das Verfahren gemäß Anspruch 13, wobei die vordefinierte Anzahl (N) mindestens eins ist.

17. Das Verfahren gemäß Anspruch 16, wobei das interne Datenfreigabesignal (DE') erzeugt wird in Synchronisation mit dem Eingabedaten-Freigabesignal (DE), verschoben um eine vordefinierte Anzahl (N) von Zeilen, wobei das interne Datenfreigabesignal (DE') dieselbe Polarität hat wie das Eingabedaten-Freigabesignal (DE).

18. Das Verfahren gemäß Anspruch 13, wobei die Ausgabe des vertikalen Sync-Startsignals (STV) beim Extrahieren der Daten in Schritt (b) Folgendes umfasst:
(b-11) Initialisieren (s110) eines Zeilenzählwerts und eines internen Flags;
(b-12) Überprüfen (s120), ob das Datenfreigabesignal (DE) vorhanden ist;
(b-13) Erhöhen (s130) des Zeilenzählwerts um eins und Überprüfen, ob der aktualisierte Zeilenzählwert größer ist als als eine erste Anzahl von Zeilen (N+1), die die Anzahl von Gate-Zeilen plus eins (N+1) ist, wenn das Datenfreigabesignal (DE) in Schritt (b-12) vorhanden ist;
(b-14) Zurückkehren zu Schritt (b-12), wenn der aktualisierte Zeilenzählwert gleich der oder kleiner als die erste Anzahl von Zeilen (N+1) ist, und Erzeugen (s150) eines Speicherextraktions-Flag-Signals, um die Daten zu extrahieren, wenn der aktualisierte Zeilenzählwert größer ist als die erste Anzahl von Zeilen (N+1);
(b-15) Überprüfen (s160), ob der aktualisierte Zeilenzählwert gleich der Anzahl von Gate-Zeilen (N) ist, und wenn nicht, Zurückkehren zu Schritt (b-12);
(b-16) Erzeugen (s170) eines internen Flag-Signals und Erhöhen eines internen Flag-Zählwerts um eins, wenn der aktualisierte Zeilen-Zählwert gleich der Anzahl von Gate-Zeilen (N) in Schritt (b-15) ist oder wenn das Datenfreigabesignal (DE) in Schritt (b-12) nicht existiert; und
(b-17) Vergleichen (s180) des aktualisierten Intervall-Flag-Zählwerts mit der ersten Anzahl von Zeilen (N+1), Beenden des Prozessablaufs, wenn der interne Flag-Zählwert größer ist als die erste Anzahl von Zeilen (N+1), und Zurückkehren zu Schritt (b-16), wenn der interne Flag-Zählwert gleich der oder kleiner ist als die erste Anzahl von Zeilen (N+1).

19. Das Verfahren gemäß Anspruch 13, wobei die Ausgabe des vertikalen Sync-Startsignals (STV) bei der Erfassung der Daten in Schritt (b) Folgendes umfasst:
(b-21) Initialisieren (s210) eines Zeilen-Zählwerts;
(b-22) Überprüfen (s220), ob das Datenfreigabesignal (DE) vorhanden ist, Beenden des Prozessablaufs, wenn das Datenfreigabesignal (DE) nicht existiert, und Erhöhen (s230) des Zeilen-Zählwerts um eins, wenn das Datenfreigabesignal (DE) existiert;
(b-23) Erzeugen (s240) eines Speichererfassungs-Flag-Signals, um die Daten zu erfassen; und
(b-24) Überprüfen (s250), ob der aktualisierte Zeilen-Zählwert in Schritt (b-22) gleich der Anzahl (N) vertikal angeordneter Gate-Zeilen (G1, G2, G3, ... Gm-1, Gm) ist, Beenden des Prozessablaufs, wenn der aktualisierte Zeilen-Zählwert gleich der Anzahl von Gate-Zeilen (N) ist, und Zurückkehren zu Schritt (b-22), wenn der aktualisierte Zeilen-Zählwert nicht gleich der Anzahl von Gate-Zeilen (N) ist.

## Revendications

1. Appareil de commande d'un affichage à cristaux liquides (LCD), le LCD incluant un panneau LCD comportant une pluralité de lignes de données (D1, D2, D3, ..., Dm-1, Dm) et une pluralité de lignes de grilles (G1, G2, G3, ... Gm1, Gm), le LCD chargeant un pixel spécifique en chargeant, en premier lieu, les données d'un pixel adjacent ayant la même polarité que le pixel spécifique pour changer la polarité du pixel correspondant, et en chargeant, en second lieu, les données du pixel spécifique, l'appareil de commande comportant :
un contrôleur d'horloge (100) pour recevoir des données d'image externes, et délivrer en sortie un signal de début de synchronisation verticale (STV) basé sur un signal d'autorisation de transfert de données (DE) ayant un intervalle de sortie irrégulier pour commander la sortie des données d'image, le signal de début de synchronisation verticale (STV) ayant un intervalle de génération correspondant à un intervalle vide du signal d'autorisation de transfert de données interne (DE'),
un circuit de commande de données (200) pour convertir les données d'image et transmettre les données d'image converties à l'une des lignes de données du panneau LCD ; et
un circuit de commande de grille (300) pour appliquer une première tension d'excitation de grille lors d'une première charge vers la ligne de grille du panneau LCD, et une seconde tension d'excitation de grille lors d'une seconde charge vers la ligne de grille, sur la base du signal de début de synchronisation verticale (STV), et commander l'affichage des données d'image converties fournies à partir du circuit de commande de données (200) pendant la seconde charge, dans lequel la première tension d'excitation de grille commande une ligne précédente étant la plus adjacente à la ligne actuelle et ayant la même polarité que celle-ci, et la seconde tension d'excitation de grille est destinée à commander la ligne actuelle.

2. Appareil selon la revendication 1, dans lequel le signal de début de synchronisation verticale (SVT) comporte un signal pour générer la première tension d'excitation de grille et un signal pour générer la seconde tension d'excitation de grille.

3. Appareil selon la revendication 1, dans lequel le contrôleur de synchronisation (100) comporte :
un convertisseur d'autorisation de transfert de données interne (110) pour recevoir le signal d'autorisation de transfert de données (DE) ayant un intervalle de sortie irrégulier, et délivrer en sortie un signal d'autorisation de transfert de données interne (DE') décalé d'un nombre (N) de lignes prédéterminé,
un compteur (120) pour compter le nombre de signaux d'autorisation de transfert de données (DE) appliqués au convertisseur d'autorisation de transfert de données interne (110) pour délivrer en sortie des premier et second signaux de commutation,
un générateur de signaux de commande (130) pour recevoir le signal d'autorisation de transfert de données interne (DE') décalé du nombre (N) de lignes prédéterminé pour délivrer en sortie un signal de commande pour commander le panneau LCD (400),
un premier commutateur (140) ayant un trajet d'entrée et une pluralité de trajets de sortie, pour déterminer le trajet de sortie du signal de données d'image sur la base du premier signal de commutation,
une unité de mémoire ayant une pluralité de mémoires (150, 160, 170) pour stocker respectivement des données d'image reçues via le premier commutateur (140), et délivrer en sortie les données d'image stockées lorsque les données d'image de la ligne suivante sont appliquées, et
un second commutateur (180) ayant une pluralité de trajets d'entrée et un trajet de sortie, pour déterminer le trajet d'entrée des données d'image reçues de l'unité de mémoire sur la base du second signal de commutation, et délivrer en sortie les données d'image au circuit de commande de données (200).

4. Appareil selon la revendication 1, dans lequel le nombre (N) de lignes prédéterminé est d'au moins un.

5. Appareil selon la revendication 1, dans lequel le signal d'autorisation de transfert de données interne (DE') est généré en synchronisation avec le signal d'autorisation de transfert de données d'entrées (DE) décalé d'un nombre (N) de lignes prédéterminé, le signal d'autorisation de transfert de données interne (DE') ayant la même polarité que le signal d'autorisation de transfert de données d'entrée (DE).

6. Appareil selon la revendication 1, dans lequel la mémoire (150, 160, 170) comporte une mémoire de lignes.

7. Affichage à cristaux liquides (LCD) comportant :
un panneau LCD (400) étant chargé en premier lieu avec la première tension d'excitation de grille fournie à partir du circuit de commande de grille (300), et chargé en second lieu avec la seconde tension d'excitation de grille, dans lequel le panneau LCD (400) affiche les données d'image reçues du circuit de commande de données (200) pendant la seconde charge et de l'appareil de commande de la revendication 1.

8. LCD selon la revendication 7, dans lequel le signal de début de synchronisation verticale (STV) comporte un signal pour générer la première tension d'excitation de grille et un signal pour générer la seconde tension d'excitation de grille.

9. LCD selon la revendication 7, dans lequel le contrôleur de temporisation (100) comporte :
un convertisseur d'autorisation de transfert de données interne (110) pour recevoir le signal d'autorisation de transfert de données (DE) ayant un intervalle de sortie irrégulier, et délivrer en sortie un signal d'autorisation de transfert de données interne (DE') après avoir été décalé d'un nombre (N) de lignes prédéterminé,
un compteur (120) pour compter le nombre de signaux d'autorisation de transfert de données (DE) appliqués au convertisseur d'autorisation de transfert de données interne (110) pour délivrer en sortie des premier et second signaux de commutation,
un générateur de signaux de commande (130) pour recevoir le signal d'autorisation de transfert de données interne (DE') décalé du nombre (N) de lignes prédéterminé pour délivrer en sortie un signal de commande pour attaquer le panneau LCD (400),
un premier commutateur (140) ayant un trajet d'entrée et une pluralité de trajets de sortie, pour déterminer le trajet de sortie du signal de données d'image sur la base du signal du premier commutateur (140),
une unité de mémoire ayant une pluralité de mémoires (150, 160, 170) pour stocker respectivement des données d'image reçues via le premier commutateur (140), et délivrer en sortie les données d'image stockées lorsque les données d'image de la ligne suivante sont appliquées, et
un second commutateur (180) ayant une pluralité de trajets d'entrée et un trajet de sortie, pour déterminer le trajet d'entrée des données d'image reçues de l'unité de mémoire sur la base du second signal de commutation, et transmettre les donnée d'image au circuit de commande de données (200).

10. LCD selon la revendication 7, dans lequel le nombre (N) de lignes prédéterminé est d'au moins un.

11. LCD selon la revendication 7, dans lequel le signal d'autorisation de transfert de données interne (DE') est généré en synchronisation avec le signal d'autorisation de transfert de données d'entrée (DE) décalé d'un nombre (N) de lignes prédéterminé, le signal d'autorisation de transfert de données interne (DE') ayant la même polarité que le signal d'autorisation de transfert de données d'entrée (DE).

12. LCD selon la revendication 7, dans lequel la mémoire (150, 160, 170) comporte une mémoire de lignes.

13. Procédé destiné à commander un LCD qui inclut un panneau LCD (400) ayant une pluralité de lignes de données (D1, D2, D3, ..., Dm-1, Dm) et une pluralité de lignes de grilles (G1, G2 , G3 , ... Gm1, Gm), qui charge un pixel spécifique en chargeant, en premier lieu, les données d'un pixel adjacent ayant la même polarité que le pixel spécifique pour changer la polarité du pixel correspondant, et en chargeant, en second lieu, les données du pixel spécifique, le procédé comportant les étapes consistant à :
(a) recevoir des données d'image provenant d'une source de signaux d'image externes et un signal d'autorisation de transfert de données (DE) pour commander une sortie des données d'image,
(b) vérifier (s120) si le signal d'autorisation de transfert de données (DE) a été reçu, enregistrer séquentiellement les données d'image sur un nombre prédéterminé de mémoires intégrées (150, 160, 170) lors de la réception du signal d'autorisation de transfert de données (DE), extraire séquentiellement les données d'image enregistrées, et générer (s150, s240) un signal d'autorisation de transfert de données interne (DE') lors de l'extraction des données d'image pour délivrer en sortie un signal de début de synchronisation verticale (SVT) ayant un intervalle de génération correspondant à un intervalle vide du signal d'autorisation de transfert de données interne (DE'),
(c) appliquer aux lignes de données (D1, D2, D3, ..., Dm-1, Dm) une tension correspondant aux données d'image, et
(d) appliquer séquentiellement à la fois des première et seconde tensions d'excitation de grille aux lignes de grilles (G1, G2, G3, ... Gm1, Gm) sur la base du signal de début de synchronisation verticale (SVT), dans lequel la première tension d'excitation de grille est destinée à commander une ligne précédente étant la plus adjacente à la ligne actuelle et ayant la même polarité que celle-ci, et la seconde tension d'excitation de grille est destinée à commander la ligne actuelle.

14. Procédé selon la revendication 13, dans lequel les mémoires (150, 160, 170) comportent une mémoire de lignes.

15. Procédé selon la revendication 13, dans lequel le signal de début de synchronisation verticale (SVT) comporte un signal pour générer la première tension d'excitation de grille et un signal pour générer la seconde tension d'excitation de grille.

16. Procédé selon la revendication 13, dans lequel le nombre (N) prédéterminé est d'au moins un.

17. Procédé selon la revendication 16, dans lequel le signal d'autorisation de transfert de données interne (DE') est généré en synchronisation avec le signal d'autorisation de transfert de données d'entrée (DE) décalé d'un nombre (N) de lignes prédéterminé, le signal d'autorisation de transfert de données interne (DE') ayant la même polarité que le signal d'autorisation de transfert de données d'entrée (DE).

18. Procédé selon la revendication 13, dans lequel la sortie du signal de début de synchronisation verticale (SVT) lors de l'extraction des données à l'étape (b) comporte les étapes consistant à :
(b-11) initialiser (s110) une valeur de comptage de ligne et un drapeau interne,
(b-12) vérifier (s120) si le signal d'autorisation de transfert de données (DE) est présent,
(b-13) augmenter de un (s130) la valeur de comptage de ligne et vérifier si la valeur de comptage de ligne mise à jour est supérieure à un premier nombre de lignes (N+1), qui est le nombre de lignes de grilles plus un (N+1), lorsque le signal d'autorisation de transfert de données (DE) existe à l'étape (b-12),
(b-14) retourner à l'étape (b-12) lorsque la valeur de comptage de lignes mise à jour est égale ou inférieure au premier nombre de lignes (N+1), et générer (s150) un signal de drapeau d'extraction de mémoire pour extraire les données lorsque la valeur de comptage de ligne mise à jour est supérieure au premier nombre de lignes (N+1),
(b-15) vérifier (s160) si la valeur de comptage de ligne mise à jour est égale au nombre de lignes de grilles (N), et si elle ne l'est pas, retourner à l'étape (b-12),
(b-16) générer (s170) un signal de drapeau interne et augmenter de un une valeur de comptage de drapeau interne, lorsque la valeur de comptage de lignes mise à jour est égale au nombre de lignes de grilles (N) à l'étape (b-15) ou lorsque le signal d'autorisation de transfert de données (DE) n'existe pas à l'étape (b-12), et
(b-17) comparer (s180) la valeur de comptage de drapeau interne mise à jour avec le premier nombre de lignes (N+1), arrêter l'exécution du procédé lorsque la valeur de comptage de drapeau interne est supérieure au premier nombre de lignes (N+1), et retourner à l'étape (b-16) lorsque la valeur de comptage de drapeau interne est égale ou inférieure au premier nombre de lignes (N+1).

19. Procédé selon la revendication 13, dans lequel la sortie du signal de début de synchronisation verticale (SVT) lors de l'enregistrement des données à l'étape (b) comporte les étapes consistant à :
(b-21) initialiser (s210) une valeur de comptage de lignes,
(b-22) vérifier (s220) si le signal d'autorisation de transfert de données (DE) est présent, arrêter l'exécution du procédé lorsque le signal d'autorisation de transfert de données (DE) n'existe pas, et augmenter de un (s230) la valeur de comptage de lignes lorsque le signal d'autorisation de transfert de données (DE) existe,
(b-23) générer (s240) un signal de drapeau d'enregistrement en mémoire pour enregistrer les données, et
(b-24) vérifier (s250) si la valeur de comptage de lignes mise à jour à l'étape (b-22) est égale au nombre (N) de lignes de grilles agencées verticalement (G1, G2, G3, ... Gm1, Gm), arrêter l'exécution du procédé lorsque la valeur de comptage de lignes mise à jour est égale au nombre de lignes de grilles (N), et retourner à l'étape (b-22) lorsque la valeur de comptage de lignes mise à jour n'est pas égale au nombre de lignes de grilles (N).
